# EUROPÄISCHE PATENTSCHRIFT

(11) **EP 1 770 103 B1**
(45) Veröffentlichungstag und Bekanntmachung des Hinweises auf die Patenterteilung: **16.07.2008**
(21) Anmeldenummer: 06018837.2
(22) Anmeldetag: 08.09.2006
(51) Int. Cl.: C08F 136/06, C08C 19/02

(54) **Peroxydisch vernetzte hydrierte Vinylpolybutadiene sowie deren Verwendung zur Herstellung von technischen Gummiartikeln mit gutem Rückverformungsverhalten über einen breiten Temperaturbereich**
Peroxyde crosslinked hydrogenated vinylpolybutadienes and their use for the preparation of technical rubber articles with improved compression set over a broad temperature range
Vinylpolybutadiènes hydrogénés et reticulés au peroxyde et l'utilisation pour la fabrication d'objects techniques en caoutchouc avec une déformation permanente améliorée sur une large gamme de température

(30) Priorität: 17.09.2005 DE 102005044453
(43) Veröffentlichungstag der Anmeldung: 04.04.2007
(73) Patentinhaber: LANXESS Deutschland GmbH, 51369 Leverkusen (DE)
(72) Erfinder: Obrecht, Werner, Prof. Dr., 47447 Moers (DE); Bischoff, Andreas, Dr., 41541 Dormagen (DE)

(56) Entgegenhaltungen:
- EP-A- 1 693 411
- EP-A1- 0 358 589
- WO-A-20/06060896
- US-A- 5 620 939
- US-A- 5 879 805

## Beschreibung

Gegenstand der vorliegenden Erfindung sind peroxydisch vernetzte hydrierte Vinylpolybutadiene, die zur Herstellung von technischen Gummiartikeln dienen und ein sehr gutes Rückverformungsverhalten über einen breiten Temperaturbereich besitzen.

Es ist bekannt, dass technische Gummiartikel z.B. auf Basis von Ethylen/Propylen/(Dien)(EP(D)M)-Polymerisaten in Bereichen eingesetzt werden, die ein gutes Rückverformungsverhalten der entsprechenden Gummiartikel erfordern. So werden beispielsweise Gummiartikel auf Basis von EP(D)M-Kautschuken eingesetzt als Schläuche, Dichtungen aller Art, Profile bzw. Lager und Dämpfungselemente, Membranen sowie Verbundkörpern aus Gummi/Metall, Gummi/Kunststoff und Gummi/Textil. Für den Einsatz dieser technischen Gummiartikel spielt - wie erwähnt - insbesondere das gute Rückformverhalten eine besondere Rolle, d.h. die Rückstellkräfte der Vulkanisate nach Kompression und nach längerer Exposition müssen möglichst hoch bzw. die bleibenden Verformungen nach Kompression (Druckverformungsrest oder Compression-Set nach DIN 53517 A) möglichst niedrig sein. Die in diesem Zusammenhang relevanten Messgrößen sind der Druckverformungsrest oder Compression-Set nach DIN 53517 A sowie die Druckspannungsrelaxation nach DIN 53537.

Aufgrund der weiter fortschreitenden technischen Entwicklung auf den genannten Einsatzgebieten ist ein verbessertes Rückverformungsverhalten der eingesetzten Gummiartikel in einem breiten Temperaturbereich wünschenswert.

Aufgabe der vorliegenden Erfindung war es daher, eine geeignete Auswahl von hydrierten Vinylpolybutadienen zu treffen mit den mittels peroxydischer Vernetzungsmethode die Einstellung eines bestimmten Niveaus der Vulkanisat-Eigenschaften wie Härte, Elastizität, Festigkeit, Spannungswerte bei verschiedenen Dehnungen, Reißfestigkeit, Reißdehnung sowie bestimmte Compression-Set-Werte möglich ist, so dass wichtige für den technischen Gebrauch spezifizierte Eigenschaften, insbesondere ein gutes Rückverformungsverhalten, erfüllt werden können.

Es wurde nun gefunden, dass peroxydisch vernetzte hydrierte Vinylpolybutadiene ein solches Eigenschaftsprofil über einen weiten Temperaturbereich aufweisen, insbesondere im Vergleich zu den heute verbreiteten Gummiartikeln auf EP(D)M-Basis.

Gegenstand der vorliegenden Erfindung sind daher peroxydisch vernetzte hydrierte Vinylpolybutadiene, die dadurch gekennzeichnet sind, dass sie Compression-Set-Werte aufweisen im Bereich von

| | | |
|---|---|---|
| a) | 0 bis 14 | bei 23°C/70 h, |
| b) | 0 bis 19 | bei 100°C/70 h, |
| c) | 0 bis 20 | bei 125°C/70 h und |
| d) | 0 bis 28 | bei 150°C/70 h (bestimmt nach DIN 53 517 A) |

sowie Druckspannungsrelaxationswerte im Bereich von

| | | |
|---|---|---|
| e) | 0 bis 10 | bei 23°C/24 h, |
| f) | 0 bis 12 | bei 23°C/72 h und |
| g) | 0 bis 15 | bei 23°C/168 h (bestimmt nach DIN 53 537). |

Bevorzugt sind peroxydisch vernetzte hydrierte Polybutadiene, die Compression-Set-Werte aufweisen im Bereich von

| | | |
|---|---|---|
| a) | 3 bis 11 | bei 23°C/70 h, |
| b) | 4 bis 16 | bei 100°C/70°C |
| c) | 6 bis 18 | bei 125°C/70 h und |
| d) | 10 bis 25 | bei 150°C/70 h |

sowie Druckspannungsrelaxationswerte im Bereich von

| | | |
|---|---|---|
| a) | 2 bis 8 | bei 23°C/24 h, |
| b) | 3 bis 10 | bei 23°C/72 h und |
| c) | 5 bis 12 | bei 23°C/168 h. |

Darüber hinaus besitzen die erfindungsgemäßen peroxydisch vernetzten Vinylpolybutadiene noch zusätzlich folgende physikalische Eigenschaften:
Bruchdehnung: 400 % bis 900 % bei 23°C (bestimmt nach DIN 53504)
   sowie
Reißfestigkeit: 10 MPa bis 14 MPa bei 23°C (bestimmt nach DIN 53504).

Zur Herstellung der erfindungsgemäßen peroxydisch vernetzten hydrierten Vinylpolybutadiene dienen hydrierte Vinylpolybutadiene wie sie in DE 10 324 304 A1 in allgemeiner Form beschrieben werden. Um das sehr gute Rückverformungsverhalten der erfindungsgemäß vernetzten hydrierten Vinylpolybutadiene in einem weiten Temperaturbereich zu erreichen, werden zur Vernetzung spezielle hydrierte Vinylpolybutadiene ausgewählt, die ein bestimmtes Eigenschaftsprofil besitzen, wie Mooney-Werte (ML 1+4/125°C) von 40 bis 150 Mooney-Einheiten, Hydriergrade von 70 bis 100 % und Schmelzenthalpien im Bereich von 0 bis 10 J/g.

Bevorzugt werden hydrierte Vinylpolybutadiene ausgewählt mit Mooney-Werten im Bereich von bis 60 bis 140 Mooney-Einheiten, Hydriergraden von 80 bis 100 % und Schmelzenthalpien von 0 bis 5 J/g.

Die auszuwählenden hydrierten Vinylpolybutadiene für die erfindungsgemäße peroxydische Vernetzung können hergestellt werden nach den in der genannten deutschen Offenlegungsschrift beschriebenen Herstellungsverfahren. So ist es beispielsweise möglich, die als Ausgangsprodukte einzusetzenden hydrierten Vinylpolybutadiene herzustellen durch anionische Polymerisation von Butadien mit Butyllithium oder sec. Butyllithium in Gegenwart von Benzol, technischen Hexangemischen oder Cyclohexan als Lösungsmittel unter Einstellung des geforderten Vinylgehalts mittels Additiven wie Tetramethylethylendiamin, Dimethyloxyethan, Butoxyethoxyethan und/oder THF bei Temperaturen von 20°C bis 150°C. Die Hydrierung der so erhaltenen Vinylpolybutadiene kann mittels eines Katalysators auf Basis von Ni(Oct)₂/Triethylaluminium, Co(Oct)₂/Triethylaluminium, Dicyclopentadienyltitandichlorid/BuLi oder Dicyclopentadienyltitandichlorid/Triethylaluminium, Tris(triphenylphosphin)rhodium(I)-chlorid (Wilkinson-Katalysator) in Gegenwart der zuvor genannten Lösungsmittel erfolgen. Bevorzugt erfolgt die Hydrierung im gleichen Lösungsmittel wie die Herstellung des Vinylpolybutadiens ohne Isolation des Vinylpolybutadiens (in-situ-Hydrierung). Vor der Isolierung des hydrierten Polymeren aus der Lösung wird der Hydrierkatalysator entfernt. Außerdem wird vor der Aufarbeitung ein übliches Alterungsschutzmittel zugesetzt.

Wie zuvor erwähnt, werden die speziell ausgewählten hydrierten Vinylpolybutadiene mit Hilfe von insbesondere Peroxyden vernetzt. Es ist auch möglich, Azoverbindungen sowie hochenergiereiche Strahlung zur Vernetzung zu verwenden. Die Vernetzung mittels Peroxiden ist dem Fachmann bekannt und beispielsweise in allgemeiner Form beschrieben in P.R. Dluzneski "Peroxide Vulcanization of Elastomers" Rubber Chemistry and Technology 74(3), 451 (2001) sowie in J.D. van Drumpt "Peroxide crosslinking: a strength/weakness analysis vs sulphur vulcanization" Rubber World März 1998, S. 33-41.

Als peroxydische Verbindungen, die für die Vernetzung der hydrierten Vinylpolybutadiene geeignet sind, sind zu erwähnen: Organische Peroxyde, die symmetrisch oder unsymmetrisch aufgebaut sein können, wie Diacylperoxide, Peroxydicarbonate, Dialkylperoxide, Perester, Peroxyketale, Peroxyketone sowie Hydroperoxide.

Beispiele für symmetrisch aufgebaute organische Peroxyde sind Dicumylperoxid, Bis-(t-butyl-peroxy-isopropyl)benzol, Di-t-butylperoxid, 2,5-Di-methylhexan-2,5-dihydroperoxid, 2,5-Dimethythexin-2,5-dihydroperoxid, Dibenzoylperoxid sowie Bis-(2,4-dichlorobenzoyl)peroxid. Beispiele für unsymmetrisch aufgebaute organische Peroxide sind: t-Butylperbenzoat, t-Butylperoxyacetat, 4,4-Di-tert-butylperoxybutan, 4,4-Di-tert.-butylperoxy-n-butylvalerat, t-Butylperoxydiethylacetat, t-Butylperoxyisobutyrat sowie t-Butylcumylperoxid.

Als Diacylperoxide können beispielsweise eingesetzt werden: Dibenzoylperoxid, Bis-(2,4-dichlorobenzoyl)peroxid, t-Butylperbenzoat, Dilauroylperoxid, Dioctanoylperoxid, Dipropionylperoxid, Bis(3,5,5-trimethylhexanoyl)peroxid, Bis(ortho-methylbenzoyl)peroxid, t-Butylperoxipivalat, t-Butylperoxineodecanoat, t-Butylperoxi-2-ethylhexanoat, Acetylcyclohexansulphonylperoxid,
als Peroxydicarbonate zum Beispiel: Bis(2-ethylhexyl)peroxydicarbonat, Bis(4-tert.-butylcyclohexyl)peroxydicarbonat, Di-cyclohexylperoxydicarbonat, Di-n-propylperoxydicarbonat, Di-n-butylperoxydicarbonat, Dicetylperoxydicarbonat, Di-sec.-butylperoxydicarbonat, Diisopropylperoxydicarbonat, t-Butylperoxyisopropylcarbonat,
als Dialkylperoxide zum Beispiel: α,α'-Di(t-butylperoxy)-m/p-diisopropylbenzol, Dicumylperoxid, 2,5-Dimethyl-2,5-di(t-butylperoxy)hexan, t-Butylcumylperoxid, 2,5-Dimethyl-2,5-di(t-butylperoxy)hexin-3,
als Peroxyketale zum Beispiel: 1,1-Bis(t-butylperoxy)-3,3,5-trimethylcyclohexan, 1,1-Di(t-butylperoxy)-cyclohexan, 1,1-Di(t-amylperoxy)-cyclohexan, Ethyl-3,3-di(t-butylperoxy)-butyrat, Ethyl-3,3-di(t-amylperoxy)-butyrat sowie Hydroperoxide wie zum Beispiel Cumylhydroperoxid, Di-isopropyl-benzolmonohydroperoxid und t-Butylhydroperoxid.

Die genannten Peroxyde können sowohl einzeln als auch in Mischungen eingesetzt werden, ebenso wie im Gemisch mit den nachfolgend genannten Azoverbindungen.

Bevorzugt werden folgende peroxidische Verbindungen für die Vernetzung der hydrierten Vinylpolybutadiene eingesetzt: Dicumylperoxid, Bis-(2,4-dichlorobenzoyl)peroxid, Dibenzoylperoxid, Dimethylhexin-2,5-dihydroperoxid und 2,5-Di-methylhexan-2,5-dihydroperoxid.

Darüber hinaus ist es ebenfalls möglich - wie erwähnt - bestimmte Azoverbindungen, die wie Peroxide bei der Vernetzung in Radikale zerfallen, für die Vernetzung einzusetzen. Zu erwähnen sind beispielsweise Azo-bis-isobutyronitril, 2,2'-Azo-bis(2,4-dimethylvaleronitril) sowie Azo-biscyclohexannitril.

Die Peroxide sowie die Azoverbindungen können in Mengen von ca. 0,5 bis 15 phr, vorzugsweise 1 bis 10 phr, insbesondere 2 bis 8 phr (jeweils bezogen auf die Wirksubstanz) eingesetzt werden.

Selbstverständlich ist es zusätzlich möglich, die Vernetzung mit den genannten radikalbildenden Substanzen in Gegenwart von bestimmten multifunktionellen Verbindungen durchzuführen, um die Vernetzungsausbeute zu verbessern. Als multifunktionelle Verbindungen kommen Verbindungen in Betracht mit mindestens 2, vorzugsweise 2 bis 4 copolymerisierbaren C=C-Doppelbindungen, wie Diallylmelamin, Diisopropenylbenzol, Divinylbenzol, Divinylether, Divinylsulfon, Diallylphthalat, Triallylcyanurat, Triallylisocyanurat, Triallylphosphat, 1,2-Polybutadien, N,N'-1,3-Phenylenbismaleimid, 2,4-Toluylenbis(maleimid) und/oder Triallyltrimellitat. Darüber hinaus kommen in Betracht die Acrylate und Methacrylate von mehrwertigen, vorzugsweise 2- bis 4-wertigen C₂- bis C₁₀-Alkoholen, wie Ethylenglykol, Propandiol-1,2, Butandiol, Hexandiol, Polyethylenglykol mit 2 bis 20, vorzugsweise 2 bis 8 Oxyethyleneinheiten, Neopentylglykol, Bisphenol-A, Glycerin, Trimethylolpropan, Pentaerythrit, Sorbit sowie ungesättigte Polyester aus aliphatischen Di- und Polyolen ebenso wie Maleinsäure, Fumarsäure und/oder Itaconsäure.

Bevorzugte Verbindungen sind: Triallylcyanurat, Triallylisocyanurat, N,N'-1,3-Phenylenbismaleimid, 1,2-Polybutadien, Triallylphosphat und/oder Trimethylolpropantrimethacrylat.

Die multifunktionellen Verbindungen können in Mengen von ca. 0,1 bis 12 phr, bevorzugt 0,2 bis 8 phr, besonders bevorzugt in Mengen von 0,5 bis 5 phr eingesetzt werden.

Darüber hinaus können bei der erfindungsgemäßen Vernetzung der hydrierten Vinylpolybutadiene noch weitere bekannte Hilfsmittel und Additive eingesetzt werden. Zu erwähnen sind beispielsweise Alterungsschutzmittel, Füllstoffe, Weichmacher oder Formtrennmittel.

Als Alterungsschutzmittel kommen insbesondere solche in Frage, die möglichst wenig bei der radikalischen Vernetzung hydrierter Vinylpolybutadiene durch Abfangen von Radikalen eingreifen. Dies sind insbesondere oligomerisiertes 2,2,4-Trimethyl-1,2-dihydro-chinolin (TMQ), styrolisiertes Diphenylamin (DDA), octyliertes Diphenylamin (OCD) oder Zinksalz von 4- und 5-Methylmercaptobenzimidazol (ZMB2). Daneben können auch die bekannten phenolischen Alterungsschutzmittel eingesetzt werden, wie sterisch gehinderte Phenole bzw. Alterungsschutzmittel auf Basis von Phenylendiamin. Es können auch Kombinationen der genannten Alterungsschutzmittel eingesetzt werden.

Die Alterungsschutzmittel werden üblicherweise in Mengen von ca. 0,1 bis 5 phr, bevorzugt 0,3 bis 3 phr, bezogen auf die Gesamtmenge Polymer, eingesetzt.

Als Formtrennmittel kommen beispielsweise in Betracht: Gesättigte und teilweise ungesättigte Fett- und Ölsäuren und deren Derivate (Fettsäureester, Fettsäuresalze, Fettalkohole, Fettsäureamide), die vorzugsweise als Mischungsbestandteil Verwendung finden, weiterhin auf die Formoberfläche applizierbare Produkte, wie beispielsweise Produkte auf Basis von niedermolekularen Silikonverbindungen, Produkte auf Basis von Fluorpolymeren sowie Produkte auf Basis von Phenolharzen.

Die Formtrennmittel werden als Mischungsbestandteil in Mengen von ca. 0,2 bis 10 phr, bevorzugt 0,5 bis 5 phr, bezogen auf die Gesamtmenge Polymer eingesetzt.

Als Füllstoffe können u.a. Ruß, Kieselsäure, Caliciumcarbonat, Bariumsulfat, Zinkoxid, Magnesiumoxid, Aluminiumoxid, Eisenoxid, Diatomeenerde, Korkmehl und/oder Silikate eingesetzt werden. Die Auswahl der Füllstoffe richtet sich nach dem einzustellenden Eigenschaftsprofil der Vulkanisate. Sollten die Vulkanisate z.B. flammfest ausgerüstet werden, empfiehlt sich der Einsatz von entsprechenden Hydroxiden, wie Aluminiumhydroxid, Magnesiumhydroxid, Calciumhydroxid sowie von wasserhaltigen Salzen, insbesondere von Salzen, die Wasser als Kristallwasser binden.

Die Füllstoffe werden im Allgemeinen in Mengen von ca. 1 bis 150 phr eingesetzt. Selbstverständlich ist es möglich, die unterschiedlichsten Füllstoffe in Mischung untereinander einzusetzen.

Außerdem können, gemeinsam mit den Füllstoffen, zur Erzielung bestimmter Produkt- und/oder Vulkanisationseigenschaften noch Füllstoffaktivatoren zugesetzt werden. Die Zugabe der Füllstoffaktivatoren kann während der Mischungsherstellung durchgeführt werden. Es kann aber auch eine Behandlung des Füllstoffes mit Füllstoffaktivator erfolgen, bevor dieser der Kautschukmischung zugesetzt wird. Hierzu können organische Silane, wie beispielsweise Vinyltrimethyloxysilan, Vinyldimethoxymethylsilan, Vinyltriethoxysilan, Vinyltris(2-methoxy-ethoxy)silan, N-Cyclohexyl-3-aminopropyltrimethoxysilan, 3-Aminopropyltrimethoxysilan, Methyltrimethoxysilan, Methyltriethoxysilan, Dimethyldimethoxysilan, Dimethyldiethoxysilan, Trimethylethoxysilan, Isooctyltrimethoxysilan, Isooctyltriethoxysilan, Hexadecyltrimethoxysilan oder (Octadecyl)methyldimethoxysilan eingesetzt werden. Weitere Füllstoffaktivatoren stellen zum Beispiel grenzflächenaktive Substanzen wie Triethanolamin und Ethylenglycole mit Molekulargewichten von 74 bis 10 000 g/mol dar. Die Menge an Füllstoffaktivatoren beträgt üblicherweise ca. 0,1 bis 10 %, bezogen auf die eingesetzte Füllstoffmenge.

Darüber hinaus können die Vulkanisate durch den Zusatz von Verstärkungsmaterialien wie Glasfasern, Fasern aus aliphatischen und aromatischen Polyamiden, z.B. Aramid^{®}, PolyesterFasern, Polyvinylalkohol-Fasern, Cellulose-Fasern, Naturfasern wie z.B. Baumwolle oder Holzfasern sowie Gewebe aus Baumwolle, Polyester, Polyamid, Glas- und Stahlcord verstärkt werden. Diese Festigkeitsträger oder Kurzfasern müssen gegebenenfalls vor ihrer Verwendung haftungsfreundlich ausgerüstet (z.B. durch RFL-Dip) werden, um einen festen Verbund mit dem Elastomer zu ermöglichen. Die Menge an Fasern beträgt üblicherweise ca. 1 bis 150 phr, bezogen auf den Polymergehalt.

Als Weichmacher können die üblichen Mineralöle in Mengen von bis zu 100 phr eingesetzt werden.

Selbstverständlich ist es möglich, noch weitere übliche Zusatz- und Hilfsstoffe in Mengen von bis zu 150 phr, bezogen auf den Polymergehalt, den Vulkanisaten zuzugeben, falls dies für das Eigenschaftsprofil der erfindungsgemäß vernetzten hydrierten Vinylpolybutadiene erforderlich sein sollte.

Weiterhin ist es möglich, mit Hilfe der erfindungsgemäßen Vulkanisate Verbundkörper mit Stahl, Thermoplasten und Duroplasten herzustellen. Die Herstellung des Verbunds erfolgt entweder während der Vulkanisation, gegebenenfalls unter Einsatz eines geeigneten Haftvermittelsystems oder nach vorheriger Aktivierung (z.B. Ätzung, Plasmaaktivierung) der Substrate sowie durch Verkleben nach der Vulkanisation.

Das Mischen der erfindungsgemäß einzusetzenden hydrierten Vinylpolybutadiene mit den zuvor genannten Zusätzen erfolgt vor der Vulkanisation in den üblichen Aggregaten, wie Innenmischern, Extrudern und Walzen.

Die Verarbeitung der Mischung kann in bekannter Weise, wie Kalandrieren, Transfermoulding, Extrudieren und Spritzgießen durchgeführt werden. Die Temperatur bei der Verarbeitung ist so zu wählen, das keine vorzeitige Vulkanisation stattfindet. Hierzu können entsprechende Vorversuche durchgeführt werden.

Die optimale Temperatur zur Durchführung der Vulkanisation ist naturgemäß von der Reaktivität des eingesetzten Vernetzers abhängig und kann im vorliegenden Fall bei Temperaturen von Raumtemperatur (ca. 20°C) bis ca. 220°C erfolgen, gegebenenfalls unter erhöhtem Druck. Die Vernetzungszeiten betragen im Allgemeinen 20 Sekunden bis 60 Minuten, bevorzugt 30 Sekunden bis 30 Minuten.

Die Vulkanisationsreaktion selbst kann in üblicher Weise durchgeführt werden, in Vulkanisationspressen, Autoklaven, in Gegenwart von Heißluft, energiereicher Strahlung (z.B. UV- oder IR-Strahlung) oder im Salzbad.

Zur Erzielung bestimmter Produkteigenschaften oder um Zerfallsprodukte des Peroxid-Vernetzers zu entfernen, kann eine Nachtemperung erforderlich sein. In diesen Fällen wird eine Nachtemperung bei Temperaturen im Bereich von 60°C bis 220°C in einem Zeitraum von ca. 2 Minuten bis 24 h gegebenenfalls unter reduziertem Druck durchgeführt.

Die erfindungsgemäß vernetzten hydrierten Vinylpolybutadiene mit den angegebenen Compression-Set-Werten und Druckspannungsrelaxations-Werten dienen zur Herstellung von technischen Gummiartikeln aller Art, insbesondere zur Herstellung von Schläuchen, Dichtungen aller Art, Profilen, Feder- und Faltenbälgen, Dichtmanschetten, Ventilen, Schutzkappen, Lagern und Dämpfungselementen, Kupplungen, Riemen, Beschichtungen, Platten und Belägen, Sohlen, Kabelummantelungen, Membranen sowie Verbundkörpern aus Gummi/Metall, Gummi/Kunststoff und Gummi/Textil.

### Beispiele

### 1. Für Untersuchungen eingesetzte hydrierte Vinylpolybutadien-Produkte (HVIBR) sowie EPDM-Vergleichsprodukte

Die Ausgangsprodukte für die hydrierten Vinylpolybutadiene (Vinylpolybutadien-Feedstocks), die für die weiteren Untersuchungen eingesetzt wurden, wurden nach der Lehre von DE 10 324 304 A1 hergestellt.

Die Basiseigenschaften der hydrierten Vinylpolybutadien-Produkte, die bei den weiteren Versuchen eingesetzt wurden, sind in nachfolgender Tabelle 1.1 zusammengefasst:

**Tabelle 1.1: Basiseigenschaften der hydrierten HVIBR-Typen**

| **Kautschuk** | **ML1+4/125° [MU]** | **Vinylgehalt (im Feed-stock) [%]** | **Hydrier-grad [%]** | **ΔH [J/g]** | **Tg [°C]** | **Ethylengehalt [%]** | **ENB-Gehalt [%]** |
|---|---|---|---|---|---|---|---|
| HVIBR 96 | 90 | 49,3 | 96,2 | 0 | -61 | - | - |
| HVIBR 94 | 136 | 47,5 | 94,1 | 2,7 | -60 | - | - |
| HVIBR 86 | 78 | 50 | 85 | 0 | -62 | - | - |

Die Compound- und Vulkanisateigenschaften der hydriertem Vinylpolybutadien wurden mit denen etablierter EPDM-Kautschuke verglichen. Die EPDM-Typen Buna^{®} EP G 5450 und Buna^{®} EP G 3440 sind Handelsprodukte der Lanxess Deutschland GmbH. Wichtige Basisdaten dieser EPDM-Typen sind in beiliegender Tabelle 1.2 zusammengefasst:

**Tabelle 1.2: Basiseigenschaften der EPDM-Vergleichsprodukte**

| **Kautschuk** | **ML1+4/125° [MU]** | **Vinylgehalt (im Feed- stock) [%]** | **Hydrier-grad [%]** | **ΔH [J/g]** | **Tg [°C]** | **Ethylengehalt [%]** | **ENB-Gehalt [%]** |
|---|---|---|---|---|---|---|---|
| Buna^{®} EPG 5450 | 46 | - | - | 0,56 | -53,3 | 52 | 4,3 |
| Buna^{®} EPG 3440 | 28 | - | - | 0 | -52,2 | 48 | 4,1 |

### 2. Herstellung, Vulkanisation und Charakterisierung der Kautschukmischungen

Drei hydrierte Vinylpolybutadien-Typen wurden mit zwei EPDM-Typen anhand der Eigenschaften der unvulkanisierten und der vulkanisierten Compounds verglichen.

### 2.1 Herstellung der Kautschukmischungen

Für die Herstellung der Kautschukmischungen wurde ein Innenmischer mit 1,5 1 Inhalt und mit "intermeshing rotor geometry" (GK1.5E von Werner & Pfleiderer) verwendet. Zuerst wurde jeweils der Kautschuk (HVIBR oder EPDM) in den Mischer gegeben. Nach 30 s wurden alle weiteren Komponenten außer dem Peroxid zugegeben und bei konstanter Rotordrehzahl bei 40 U/min gemischt. Nach einer Mischzeit von 4 min wurde die Mischung ausgeworfen und an der Luft auf Raumtemperatur abgekühlt. Anschließend wurde Perkadox^{®} BC-40 B-PD auf der Walze bei 40°C eingemischt.

### 2.2 Zusammensetzung der Kautschukmischungen

| **Kautschukmischungs-Nr.** | | **2.1.1** | **2.1.2** | **2.1.3** | **2.1.4** | **2.1.5** |
|---|---|---|---|---|---|---|
| HVIBR 96 | [phr] | 100 | | | | |
| HVIBR 94 | [phr] | | 100 | | | |
| HVIBR 85 | [phr] | | | 100 | | |
| B una EP G 5450 | [phr] | | | | 100 | |
| Buna EP G 3440 | [phr] | | | | | 100 |
| Corax^{®} N 550¹⁾ | [phr] | 80 | 80 | 80 | 80 | 80 |
| Sunpar^{®} 2280²⁾ | [phr] | 50 | 50 | 50 | 50 | 50 |
| Vulkanox^{®} HS ³⁾ | [phr] | 1 | 1 | 1 | 1 | 1 |
| Polyglykol^{®} 4000 S⁴⁾ | [phr] | 1 | 1 | 1 | 1 | 1 |
| Perkadox^{®} BC-40B-PD⁵⁾ | [phr] | 7,5 | 7,5 | 7,5 | 7,5 | 7,5 |
| Rhenofit^{®} EDMA/S⁶⁾ | [phr] | 2 | 2 | 2 | 2 | 2 |

| | | | | | | |
|---|---|---|---|---|---|---|
| 1) Spezifizierter Ruß der Degussa AG 2) Mineralölweichmacher der Sunoco Rubber & Chemical 3) 2,2,4-Tetramethyl-1,2-dihydrochinolin, polymerisiert, der Lanxess Deutschland GmbH 4) Polyethylenglykol der Clariant 5) Dicumylperoxid, 40 %, mit inerten Füllstoffen der Akzo Nobel 6) Ethylenglycoldimethacrylat, gebunden mit Kieselsäure, der Rheinchemie Rheinau GmbH | | | | | | |

An den unvulkanisierten Kautschukmischungen werden folgende Werte bestimmt:

### 2.3 Eigenschaften der Kautschukmischungen

| **Kautschukmischung-Nr.** | | **2.2.1** | **2.2.2** | **2.2.3** | **2.2.4** | **2.2.5** |
|---|---|---|---|---|---|---|
| Mooneyviskosität (ML1+4/100°C) nach ASTM D 1646 | [Mu] | 76 | 75 | 67 | 51 | 34 |
| Mooneyrelaxation (MR) nach ISO 289, Teil 4 | [%] | 3,8 | 9,8 | 5,4 | 4,3 | 4,4 |

Das Vulkanisationsverhalten der Mischungen wurde nach ASTM D5289 bei 180°C mit Hilfe des Moving Die Rheometers MDR 2000 der Firma Alpha Technology untersucht. Auf diese Weise wurden die charakteristischen Vulkameterwerte Fₐ, Fₘₐₓ, F_{max.}-Fₐ, t₁₀, t₅₀, t₉₀ und t₉₅ bestimmt

### 2.4 Vulkanisationsverhalten der Kautschukmischungen

| **Kautschukmischung-Nr.** | | **2.3.1** | **2.3.2** | **2.3.3** | **2.3.4** | **2.3.5** |
|---|---|---|---|---|---|---|
| Fₐ | [dNm] | 1,77 | 1,92 | 1,76 | 1,03 | 0,68 |
| Fₘₐₓ | [dNm] | 9,46 | 9,00 | 11,39 | 9,86 | 7,24 |
| Fₘₐₓ-Fₐ | [dNm] | 7,69 | 7,08 | 9,63 | 8,83 | 6,56 |
| t₁₀ | [min] | 0,52 | 0,52 | 0,50 | 0,64 | 0,71 |
| t₅₀ | [min] | 1,19 | 1,20 | 1,21 | 1,39 | 1,56 |
| t_{9β} | [min] | 2,76 | 2,75 | 2,96 | 3,09 | 3,49 |
| t₉₅ | [min] | 3,45 | 3,42 | 3,71 | 3,94 | 4,47 |

Nach DIN 53 529, Teil 3 bedeuten:
Fₐ: Vulkameteranzeige im Minimum der Vemetzungsisotherme
Fₘₐₓ: Maximum der Vulkameteranzeige
Fₘₐₓ-Fₐ: Differenz der Vulkameteranzeigen zwischen Maximum und Minimum
t₁₀: Zeitpunkt, bei dem 10 % des Endumsatzes erreicht sind
t₅₀: Zeitpunkt, bei dem 50 % des Endumsatzes erreicht sind
t₉₀: Zeitpunkt, bei dem 90 % des Endumsatzes erreicht sind
t₉₅: Zeitpunkt, bei dem 95 % des Endumsatzes erreicht sind

Die Mischungen wurden in einer Plattenpresse unter einem Druck von 170 bar bei 180°C gemäß den in Tab. 2.4 angegebenen t₉₅-Zeiten vulkanisiert.

An den ungealterten Vulkanisaten wurden folgende Prüfwerte bei 23°C bzw. 70°C bestimmt.

### 2.5 Vulkanisateigenschaften der Kautschukmischungen

| **Kautschukmischung-Nr.** | | **2.4.1** | **2.4.2** | **2.4.3** | **2.4.4** | **2.4.5** |
|---|---|---|---|---|---|---|
| Shore A Härte bei 23°C/DIN 53 505 | [ShA] | 48 | 47 | 51 | 50 | 45 |
| Shore A Härte bei 70°C / DIN 53 505 | [ShA] | 45 | 45 | 55 | 46 | 41 |
| Rückprallelastizität bei 23°C nach DIN 53 512 | [%] | 47,2 | 50,8 | 47 | 49 | 45 |
| Rückprallelastizität bei 70°C nach DIN 53 512 | [%] | 51,1 | 56,6 | 58 | 50 | 42,5 |
| Spannungswert bei 25 % Dehnung (σ₂₅) 23°C/DIN 53 504 | [MPa] | 0,49 | 0,48 | 0,53 | 0,55 | 0,47 |
| Spannungswert bei 100 % Dehnung (σ₁₀₀) 23°C/DIN 53 504 | [MPa] | 1,2 | 1,3 | 1,6 | 1,1 | 1,0 |
| Spannungswert bei 300 % Dehnung (σ₃₀₀) 23°C/DIN 53 504 | [MPa] | 5,1 | 6,4 | 6,0 | 5,0 | 4,2 |
| Zugfestigkeit (σₘₐₓ.) 23°C/DIN 53 504 | [MPa] | 11,2 | 12,8 | 11,2 | 12,0 | 9,9 |
| Bruchdehnung (ε_{b}) 23°C/DIN 53 504 | [%] | 826 | 693 | 469 | 639 | 662 |
| Druckverformungsrest nach 70 h/23°C (DIN 53 517 A) | [%] | 10,3 | 8,5 | 4,1 | 14,6 | 19,2 |
| Druckverformungsrest nach 70 h/100°C (DIN 53 517 A) | [%] | 14,7 | 11,8 | 7,2 | 19,9 | 23,6 |
| Druckverformungsrest nach 70 h/125°C (DIN 53 517 A) | [%] | 16,3 | 14,2 | 8,9 | 20,6 | 23,1 |
| Druckverformungsrest nach 70 h/150°C (DIN 53 517 A) | [%] | 23,8 | 20,9 | 18,5 | 28,6 | 33,5 |
| Druckspannungsrelaxation nach 24 h bei 23°C (DIN 53 537) | [%] | 4,1 | 3,9 | 3,2 | 12,5 | 13,3 |
| Druckspannungsrelaxation nach 72 h bei 23°C (DIN 53 537) | [%] | 7,2 | 6,1 | 4,1 | 14,5 | 18,3 |
| Druckspannungsrelaxation nach 168 h bei 23°C (DIN 53 537) | [%] | 10,9 | 9,5 | 5,9 | 19,1 | 26,2 |

Die Bestimmung der physikalischen Parameter erfolgte nach den einschlägigen DIN-, ISO- bzw. ASTM-Vorschriften. Ergänzend wird auf Kleemann und Weber, Formeln und Tabellen für die Elastomerverarbeitung, Dr. Gupta Verlag, 1994 hingewiesen.

### 3. Diskussion der Ergebnisse

Die erfindungsgemäßen Beispiele zeigen, dass im Fall der vulkanisierten Kautschukmischungen aus hydriertem Vinylpolybutadien, die Werte für den Druckverformungsrest über einen breiten Temperaturbereich sowie die Werte für die Druckspannungsrelaxation günstiger liegen, als bei den Vergleichsbeispielen. Gleichzeitig liegen die anderen mechanischen Kenndaten der HVIBR-Vulkanisate größenordnungsmäßig auf etwa gleichem Niveau wie die der EPDM-Vergleichsbeispiele.

## Patentansprüche

1. Peroxydisch vernetzte hydrierte Vinylpolybutadiene, **dadurch gekennzeichnet, dass** sie Compression-Set Werte im Bereich von
a) 0 bis 14 bei 23°C/70 h,
b) 0 bis 19 bei 100°C/70 h,
c) 0 bis 20 bei 125°C/70 h und
d) 0 bis 28 bei 150°C/70 h
sowie Druckspannungsrelaxationswerte im Bereich von
e) 0 bis 10 bei 23°C/24 h,
f) 0 bis 12 bei 23°C/72 h und
g) 0 bis 15 bei 23°C/168 h aufweisen.

2. Verwendung der peroxydisch vernetzten hydrierten Vinylpolybutadiene nach Anspruch 1 zur Herstellung von technischen Gummiartikeln.

3. Verwendung der peroxydisch vernetzten hydrierten Vinylpolybutadiene nach Anspruch 1 zur Herstellung von Schläuchen, Dichtungen aller Art, Profilen, Feder- und Faltenbälgen, Dichtmanschetten, Ventilen, Schutzkappen, Lagern und Dämpfungselementen, Kupplungen, Riemen, Beschichtungen, Platten und Belägen, Sohlen, Kabelummantelungen, Membranen sowie Verbundkörpern aus Gummi/Metall, Gummi/Kunststoff und Gummi/Textil.

## Claims

1. Peroxidically crosslinked hydrogenated vinylpolybutadienes, **characterized in that** they have compression set values in the range from
a) 0 to 14 at 23°C/70 h,
b) 0 to 19 at 100°C/70 h,
c) 0 to 20 at 125°C/70 h and
d) 0 to 28 at 150°C/70 h
and compressive stress relaxation values in the range from
e) 0 to 10 at 23°C/24 h,
f) 0 to 12 at 23°C/72 h and
g) 0 to 15 at 23°C/168 h.

2. Use of the peroxidically crosslinked hydrogenated vinylpolybutadienes according to Claim 1 for production of technical rubber products.

3. Use of the peroxidically crosslinked hydrogenated vinylpolybutadienes according to Claim 1 for production of hoses, gaskets of any type, profiles, bellows, sealing collars, valves, protective caps, bearings and dampers, couplings, drive belts, coatings, sheets and coverings, soles, cable sheathing, membranes and composite articles composed of rubber/metal, rubber/plastic and rubber/textile.

## Revendications

1. Vinylpolybutadiènes hydrogénés réticulés par peroxyde, **caractérisés en ce qu'**ils présentent des valeurs de déformation permanente en compression de l'ordre de :
a) 0 à 14 à 23 °C/70 h,
b) 0 à 19 à 100 °C/70 h,
c) 0 à 20 à 125 °C/70 h et
d) 0 à 28 à 150 °C/70 h
ainsi que des valeurs de relaxation de contrainte en compression de l'ordre de :
e) 0 à 10 à 23 °C/24 h,
f) 0 à 12 à 23 °C/72 h et
g) 0 à 15 à 23 °C/168 h.

2. Utilisation des vinylpolybutadiènes hydrogénés réticulés par peroxyde suivant la revendication 1 pour la production d'articles techniques en caoutchouc.

3. Utilisation des vinylpolybutadiènes hydrogénés réticulés par peroxyde suivant la revendication 1 pour la production de tuyaux flexibles, de joints de tous types, de profilés, de soufflets ressort et accordéon, de colliers d'étanchéité, de vannes, de couvercles de protection, de paliers et d'éléments amortisseurs, de raccords, de courroies, de revêtements, de panneaux et de garnitures, de semelles, de gaines de câbles, de membranes et de corps composites à base de caoutchouc/métal, de caoutchouc/plastique et de caoutchouc/textile.
